# EUROPEAN PATENT SPECIFICATION

(11) **EP 2 509 823 B1**
(45) Date of publication and mention of the grant of the patent: **23.04.2014**
(21) Application number: 10796187.2
(22) Date of filing: 09.12.2010
(51) Int. Cl.: B60P 7/13

(54) **LOCKING DEVICE**
VERRIEGELUNGSVORRICHTUNG
DISPOSITIF DE VERROUILLAGE

(30) Priority: 09.12.2009 NL 2003928
(43) Date of publication of application: 17.10.2012
(73) Proprietor: Logi-d B.V., 3572 EG Utrecht (NL); van Britsom, Rony, 2980 Sint Antonius Zoersel (BE)
(72) Inventor: STRIEN, Cornelis, Gerardus, NL-3415 PS Polsbroek (NL)
(74) Representative: Jansen, Cornelis Marinus
(86) International application number: PCT/NL2010/050838
(87) International publication number: WO 2011/071384

(56) References cited:
- WO-A1-2004/045904
- WO-A2-2007/142531
- DE-A1- 2 050 283
- DE-A1- 2 410 771
- DE-A1- 2 539 081
- DE-B1- 2 312 402
- GB-A- 1 523 863
- US-A- 3 682 423

## Description

The invention relates to a locking device for locking a swop container onto a transport vehicle.

Locking devices for swop containers are known. Swop containers are placed on supports, a transport vehicle such as a truck with a trailer is driven underneath the swop container. Then by raising the trailer, the swop container can contact the trailer and can be carried onto the trailer. When the swop container is carried by the trailer, the supports are folded-in and/or removed. For locking the swop container on the trailer, locking devices commonly known to the person skilled in the art as "twist locks" are used. In particular for swop containers twist locks have been developed that can be lowered. By lowering the twist lock, for example in the lateral beams of the trailer of the transport vehicle, the twist lock and the swop container can be protected from damaging when the transport vehicle is positioned underneath the swop container.

A drawback of the twist locks is that it is relatively labor intensive to handle all the twist locks of the transport vehicle when loading a swop container. The twist locks first have to be loosened, then lowered, then moved upwards, then locked, all to be done by hand. Since a transport vehicle usually has at least four twist locks and the twist locks have to be handled by hand, this can be very time consuming and labor intensive. In particular when a vehicle has just been loaded, the time consuming fastening can jeopardize the efficiency.

DE 2410771 discloses a retractable twist lock. The twist lock can be extended by filling two hard wall pressure chambers with pressurized air.

An object of the invention is to provide a locking device for a swop container that obviates at least one of the above mentioned drawbacks.

Thereto, the invention provides for a locking device for a swop container according to claim 1.

By providing a locking device that can be activated by an activating unit, the energy to adjust the locking unit and to lock the locking unit in the corner piece of the swop container is delivered by the activating unit or by manpower. The truck driver does not need to adjust the locking devices one by one by hand, which is time saving and less labor intensive. So, an automated locking device can be obtained. Thus loading of a swop container may be simplified and may become more efficient. Also the locking devices according to the invention are safer to use.

The driver may simply activate the activating unit and the locking unit is adjusted from the first to the second position. Preferably, the activating unit is arranged to further adjust the locking unit from the second position to the third position to lock the swop container in the third position. The activating energy of the activating unit may be delivered by an upward movement of the transport vehicle, such as a trailer. The activating unit may thus be a provided as an arm, for example arranged in a lateral beam of the trailer. By raising the trailer the locking unit may be adjusted from the first position to the second position, and by further raising the trailer, the locking unit may be further adjusted from the second position to the third position.

Also, the activating energy of the activating unit may be provided by pressurized air, for example when the activating unit is arranged as a bellows. The bellows may inflate and thereby adjust the locking unit from the first position to the second position to the third position. Advantageously, the bellows is coupled to the air system of the transport vehicle.

Also, the activating energy of the activating unit may be provided mechanically, e.g. when the activating unit is arranged as a spindle or a spring. Also, the activating energy of the activating unit may be provided by pressurized hydraulics, e.g. when the activating unit is arranged as a hydraulic cylinder. The hydraulic cylinder may be coupled to the hydraulic system of the transport vehicle.

Also, the activating unit may be arranged as a spring, e.g. a pulling spring that is biased towards the third position of the locking unit, rendering the locking device relatively safe to use and relatively easy to activate.

The activating unit may be comprised inside or outside the housing of the locking device. By providing the activating unit inside the housing of the locking device a relatively compact and relatively simple locking device may be provided.

By providing a securing device, the locking unit can be secured to the corner piece. The locking device can thus be reliable and safely used. The securing device may comprise an air cylinder activated by an upward movement of the trailer, or may be an air cylinder activated manually. The air cylinder may be coupled to the air system of the transport vehicle, or may be provided with its own air reservoir. The securing device may comprise a mechanical securing that can be activated manually or automatically. The mechanical securing may be for example a screw or an arm that can be adjusted to a securing position. By arranging the securing device at least partially in the housing, a relatively compact and robust locking device may be provided.

The securing device may also be provided as a mechanical securing device, e.g. as cooperating elements and/or cooperating surfaces that may secure the locking unit under the friction between the cooperating surfaces. So, a locking device may be obtained that locks and secures the locking unit automatically and mechanically, so without the use of any air or hydraulic system, when the activating unit is activated.

By providing the locking device with a receiving element that is receivable in a corner piece of a swop container, the locking unit can relatively easily be guided into the corner piece. Preferably, the receiving element has dimensions standardized for corner pieces of swop containers. In an embodiment, the receiving element can be positioned slightly above the housing in the first position to allow guiding of the corner piece over the receiving element.

By providing a locking element that is receivable in the receiving element in the first position and in the second position and that extends substantially outside the receiving element in the third position for locking a corner piece of the swop container, the locking element may be protected by the receiving element when adjusting from the first position to the second position. The locking element may be substantially enclosed by the receiving element in the first and the second position. In the third position, the locking element may extend partially outside the receiving element to lock the corner piece. For example, the locking element may be provided with hooks that may extend outside the receiving element in the third position and that may hook behind a wall of the corner piece to lock the corner piece.

In an embodiment, the locking element may comprise a scissor mechanism. A scissor mechanism may provide a relatively easy and reliable locking element. The scissor mechanism may comprise two legs provided with clamping surfaces at an end of the legs, wherein the legs are in a closed position in the first and second position of the locking unit and wherein the legs are in an open position in the third position of the locking unit so the clamping surfaces clamp behind a wall of the corner piece of the swop container. By providing a scissor mechanism, the locking can be efficiently received in the receiving element in the first position and the second position and can easily extend outside the receiving element in the third position.

In an other embodiment, the locking element may comprise a twist lock-like element. For example, a twist lock element may be substantially received in the receiving element in the first and the second position. Upon adjustment from the second to the third position, the twist lock may be rotated to be positioned partially outside the receiving element and to hook behind a wall of the corner piece.

Advantageously, the scissor mechanism comprises two legs that are hingedly connected to each other, e.g. via a pivot axis. Of course, a scissor mechanism with a single leg may also provide locking of the corner piece in the third position. At one end of the legs, the legs can be provided with clamping surfaces. The clamping surfaces may be arranged to clamp behind a wall of the corner piece. The legs may at the end comprise the clamping surfaces for example they may be provided with hooks to facilitate cooperation of the clamping surfaces behind a wall of the corner piece.

By providing the housing with at least one stop element against which the locking unit abuts in the second and third position, a reliable transition can be provided from the second to the third position. By adjusting the locking unit from the first to the second position, the locking unit is adjusted from a position substantially in the housing to a position substantially outside the housing. When the second position is reached, the locking unit abuts against the stop elements to indicate that the locking unit can further be adjusted from the second position to the third position wherein the locking unit extends substantially outside the receiving element to lock the corner piece of a swop container. During adjustment from the second to the third position, the locking unit abuts against the stop elements. For the scissor mechanism as locking unit, the pivot axis may abut against the stop element.

By providing a holder arranged in the housing to accommodate the locking unit and the activating unit, wherein by activating the activating unit, the holder is pushed and the locking unit is adjusted from the first position to the second position to the third position, a relatively simple and compact coupling is provided between the locking unit and the activating unit. Preferably, the locking unit and the activating unit are each located at different sides of the holder such that by activating the activating unit, the holder can be pushed and the locking unit is pushed out of the housing.

In an embodiment, the holder can be biased towards the first position of the locking unit by a resilient element. The resilient element can be provided as a spring, e.g. a spiral spring or a torsion spring or a blade spring, or the resilient element can be provided as a rubber element. In another embodiment, the locking unit is biased towards the third position by a spring.

The locking device can be operated by an operating element. The operating element may be e.g. a knob or a button or a handle arranged on the housing. The operating element then may be manually operated to start the locking operation. Alternatively, the operating element may be a remote element, e.g. a remote control that via wires or wireless is connected to the locking device and that can be operated to start the locking operation of the locking device. Such a remote element may for example be arranged in the cabin of the transport vehicle.

In an embodiment, the operating element is also arranged to operate the securing device, such that a user, e.g. the driver of the transport vehicle, may have to perform only one action i.e. operating the operating element, and then the locking and securing operation of the locking device is started. The locking device may give an indication when the locking unit is secured so the user can check relatively easy and conveniently when the swop container is locked and secured. The indication may be provided on the securing device, or on the housing of the locking device, or on the operating element. The indication may for example be a colour indication, green for secured, red for unsecured, or a word-indication 'secured'.

The invention further relates to a transport vehicle for transporting a swop container, wherein the transport vehicle comprises at least one locking device.

Advantageously, the transport vehicle comprises two locking devices on one lateral beam. For example, a trailer for swop container usually is equipped with at least two lateral beams, a front lateral beam and a rear lateral beam. On each lateral beam two locking devices can be provided corresponding with the corner pieces of a swop container. Preferably, the two locking devices per lateral beam can be operated with a single operating element. Both locking devices can be provided with an operating element, it may be sufficient to operate one operating element to activate both locking devices on the lateral beam.

The invention further relates to a method for locking a swop container on a transport vehicle provided with at least one locking device, comprising positioning the transport vehicle underneath the swop container, adjusting the locking unit from the first position to the second position and to the third position, securing the locking unit in the third position.

The invention further relates to a method for manufacturing a transport vehicle arranged for locking a swop container comprising, cutting an edge of a lateral beam of the transport vehicle, mounting a locking device onto the cut edge of the lateral beam.

Further advantageous embodiments are represented in the subclaims.

The invention will further be elucidated on the basis of exemplary embodiments which are represented in a drawing. The exemplary embodiments are given by way of non-limitative illustration of the invention.

In the drawing:
Fig. 1 shows a schematic perspective bottom view of a first embodiment of a locking device according to the invention;
Fig. 2 shows a schematic perspective top view of the locking device of Fig. 1;
Fig. 3 shows a schematic perspective view of a second embodiment of a locking device according to the invention;
Fig. 4 shows a cross section of the embodiment of Fig. 3 in the first position;
Fig. 5 shows a cross section of the embodiment of Fig. 3 in the second position;
Fig. 6 shows a cross section of the embodiment of Fig. 3 in the third position;
Fig. 7 shows a top view of the embodiment of Fig. 3 in the third position;
Fig. 8 shows a cross section along the line B-B of the embodiment of Fig. 7;
Fig. 9 shows a cross section along the line C-C of the embodiment of Fig. 7;
Fig. 10 shows a schematic perspective view of another embodiment of a locking device according to the invention;
Fig. 11 shows a side view of the embodiment of Fig. 10 in the first position;
Fig. 12 shows a side view of the embodiment of Fig. 11 in the second position; and
Fig. 13 shows a side view of the embodiment of Fig. 11 in the third position.

It is noted that the figures are only schematic representations of embodiments of the invention that are given by way of non-limiting example. In the figures, the same or corresponding parts are designated with the same reference numerals.

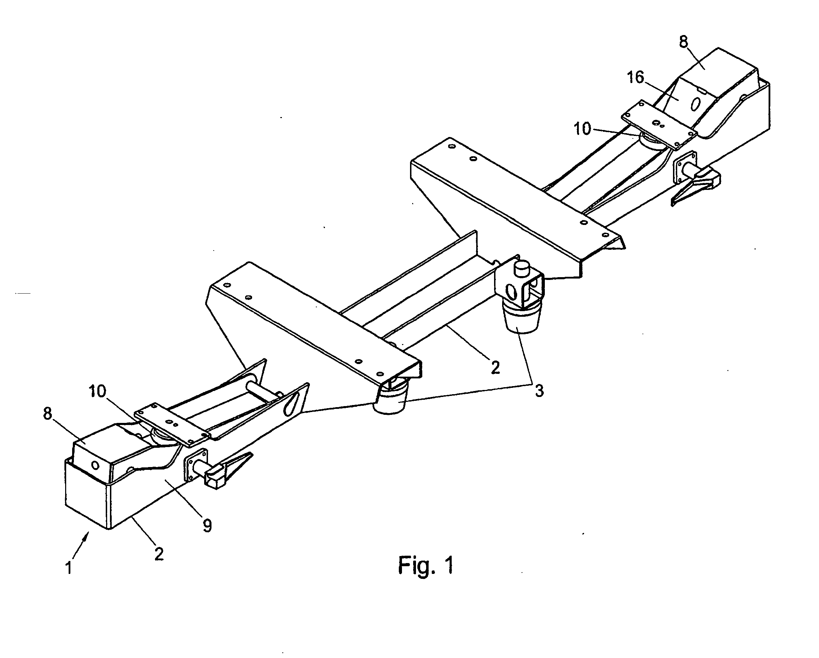

Fig. 1 shows a schematic perspective bottom view of a locking device 1 according to the invention. The locking device 1 is arranged for locking a swop container on a transport vehicle, such as a truck or a trailer. The locking device 1 is arranged for cooperation with the transport vehicle. Here, the locking device 1 is arranged in a lateral beam 2 of the transport vehicle. The lateral beam 2 forms a housing 9 of the locking device 1. Also is shown that the lateral beam 2 comprises two guiding elements 3 for guiding of the transport vehicle underneath the swop container.

For mounting a swop container onto a transport vehicle, the transport vehicle is manoeuvred underneath the swop container, that initially is positioned onto supports. Then the transport vehicle is moved upwards until the locking device 1 locks in the corner pieces of the swop container to fixedly mount the swop container to the transport vehicle. Then, supports of the swop container can be folded-in or can be removed.

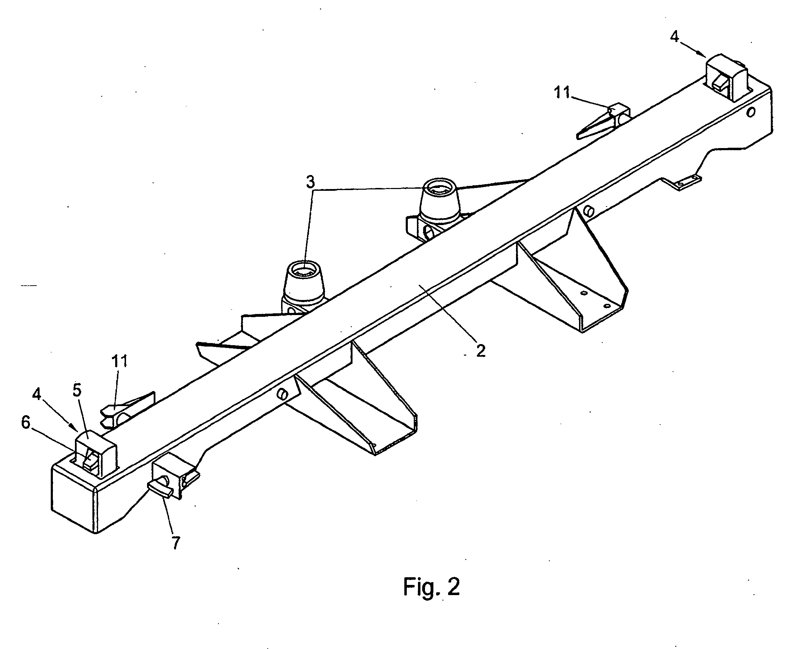

The locking device 1 comprises a locking unit 4 which is adjustable between a first position and a second position. In the first position, the locking unit 4 is received in the lateral beam 2, in the second position, shown in Fig. 2, the locking unit 4 extends substantially out of the lateral beam 2. In the second position, the locking unit 4 can be received in a corner piece of the swop container. The locking unit 4 comprises for example a receiving element 5 that can be received in the corner piece of a swop container and that may facilitate guiding of the locking unit 4 into the corner piece of the swop container. Such a receiving element 5 usually complies with standardisations.

In the second position, the locking unit 4 abuts against stop elements provided on the lateral beam 2, these are however not shown in Figure 1 and Figure 2.

The locking unit 4 is further adjustable from the second position to a third position in which the locking unit 4 locks the corner piece of the swop container. For example, the locking unit 4 may comprise a scissor mechanism 6. The scissor mechanism 6 may be received in a closed position in the receiving element 5 in the first position. In the first position, the scissor mechanism 6 is thus contained in the receiving element 5. In the second position or during adjustment from the second to the third position, the scissor mechanism 6 may open and may extend partially outside the receiving element 5. In the second position, the receiving element 5 is already inside the corner piece of the swop container, so the scissor mechanism 6 opens itself in the swop container. In the third position, the scissor mechanism 6 may be opened further until it locks the corner piece of the swop container. For example can the scissor mechanism 6 be provided with hooked end parts provided with clamping surfaces with which it can hook-behind a wall of the corner piece.

The locking unit 4 may be adjusted further from the second position to the third position by a further upward movement of the trailer and/or by a bellows 10 arranged to push the arm 8 further upwards.

The locking unit 4 is activated by an activating unit 16, here the arm 8 which is activated by the upward movement of the transport vehicle, such that the energy of the transport vehicle is used for locking the swop container. The arm 8 can also be operated by a bellows 10, in addition to or alternatively to the upward energy of the trailer. The arm 8 is movable arranged with respect to the lateral beam 2. When the locking unit is in the first position, i.e. received in the lateral beam 2, at least a part of the arm 8 extends outside the beam 2. When the transport vehicle moves upward, it contacts at least a part of the arm 8 and pushes the arm 8 upward thus moving the receiving element 5 out of the lateral beam. By pushing the arm 8 further upwards the locking unit is adjusted from the second position to the third position for locking the swop container.

On the lateral beam 2 a securing device 11 is provided for securing the scissor mechanism 6 in the third position when the swop container is locked. The securing device 11 is here provided as a handle that needs to be turned. By turning the handle, a pin is activated that secures the scissor mechanism 6 (not shown). Also other embodiments of the securing device 11 may be provided, e.g. an automatic securing device that is automatically activated when operating the operating unit 7 or a remotely operated securing device.

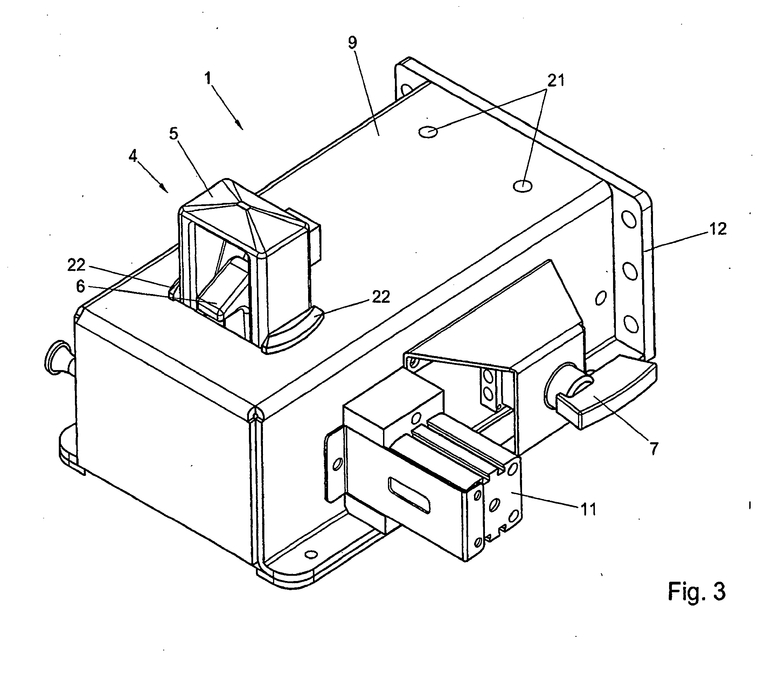

Figure 3 shows a second embodiment of a locking device 1 according to the invention. The locking device 1 comprises a housing 9 that is provided with a mounting plate 12. For providing a transport vehicle with a locking device 1, an end of a lateral beam of the transport vehicle is cut of and the locking device 1 is mounted with the mounting plate 12 to the cut end of the lateral beam. Thus, the locking device 1 forms a kind of extension of the lateral beam. In Figure 3, stop elements 22 are shown against which the locking unit 4 abuts in the second position.

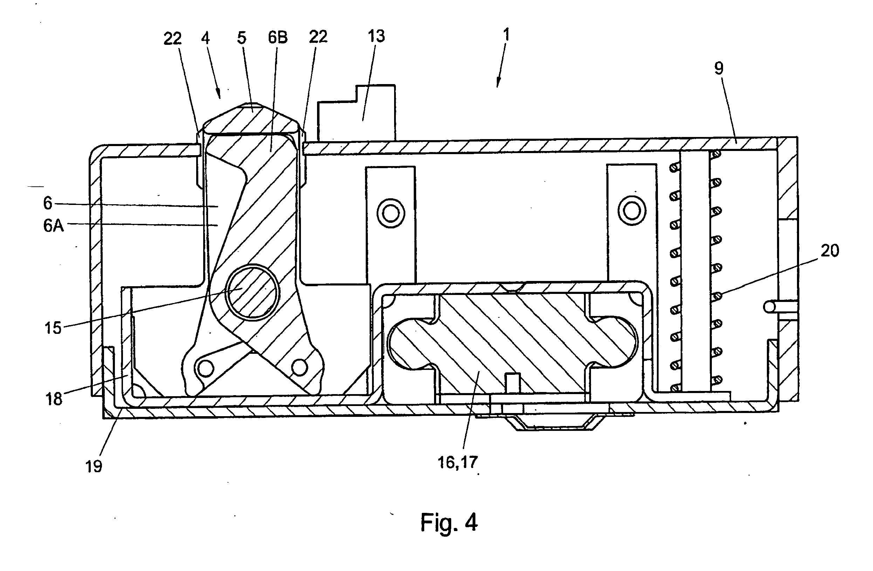

In Figure 4 a cross section of the locking device 1 is shown. In Figure 4 also a wall part 13 of a corner piece is shown. The transport vehicle, e.g. a trailer on which the locking device 1 is mounted is raised until the lateral beam abuts against the under side of the swop container. The locking device 1 comprises a locking unit 4 which is in the first position, as shown in Figure 4, substantially arranged in the housing. The locking unit 4 is here provided with a receiving element 5 in which a locking element 14 is arranged. In this embodiment, the locking element 14 is a scissor mechanism 6, but other embodiments of a locking element may also be provided e.g. a hook element, or a twist lock-like element.

The scissor mechanism 6 is here provided with two legs 6A, 6B that are hingedly coupled to each other via a pivot axis 15. In the first position, the scissor mechanism 6 is in a closed position inside the receiving element 5.

The locking unit 4 is activated by the activating unit 16, here provided as the bellows 17. The scissor mechanism 6 and the bellows 17 are arranged in a holder 18, each at an other side of the holder 18. When the bellows 17 inflates, the holder 18 is pushed upward and the locking unit 4 is also pushed upward. In the first position of the locking unit 4, the bellows 17 are approximately empty and the holder 18 is approximately at the bottom 19 of the housing 9. The bellows 17 can be inflated using air of the air system of the transport vehicle, or using air of an external air system, or they may be provided with their own air system.

The holder 18 is biased towards the first position by a resilient element 19, here a spring. The springs 19 are provided at positions 21 shown in Figure 3.

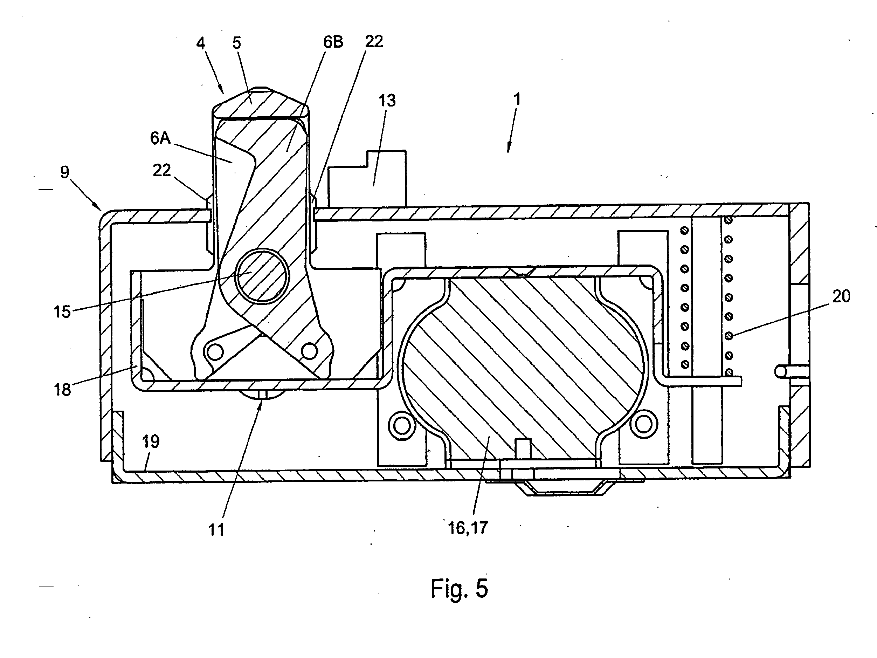

Figure 5 shows the locking device 1 with the locking unit 4 in the second position. In the second position, the locking unit 4 is substantially outside the housing 9 and the bellows 17 is partially inflated. The scissor mechanism 6 is in the closed position inside the receiving element 5. The holder 18 is in a position above the bottom 19 of the housing 9. In the second position the pivot axis 15 abuts against the stop elements 22, the pivot axis 15 of the scissor mechanism 6 may not be adjusted further upward.

When further inflating the bellows 17, the holder 18 moves further upward. While the pivot axis 15 is abutted against the stop elements 22, the pivot axis 15 cannot move further upward. Therefore, when moving the holder 18 further upward, the scissor mechanism 6 opens. The legs 6A and 6B spread until the scissor mechanism 6 is substantially outside the receiving element 5 in the third position. In the third position, the bellows 17 is approximately fully inflated.

The scissor legs 6A and 6B are at one end provided with clamping surfaces 23 that are arranged to clamp behind a wall 13 of a corner piece of the swop container. In this embodiment, the scissor legs 6A, 6B are provided with hooking elements 24 on which the clamping surfaces 23 are arranged. The hooking elements 24 hook behind a wall 13 of a corner piece in the third position to lock the swop container.

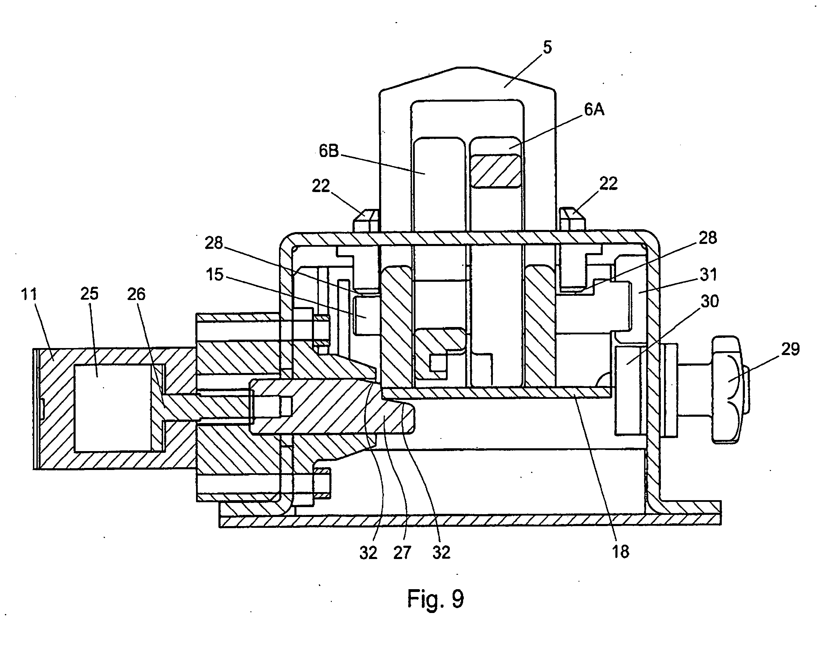

When the locking unit 4 is in the third position, the swop container is locked to the transport vehicle. The locking unit can then be secured. Thereto, a securing device 11 is provided. The securing device 11 is here provided as an air cylinder 25, as shown in Figure 9. When activated a piston 26 of the air cylinder 25 is extended outside the air cylinder 25 and drives a securing pin 27. The securing pin 27 is connected to the air cylinder 25, in this embodiment via a screw connection. Also other connections may be possible, such as gluing, welding, bolting, etc. The securing pin 27 is then driven outwardly until it is positioned underneath the holder 18. So, in case the bellows loosens air, the holder 18 rests on the pin 27 and remains in the third position. Therefore, securing of the locking device is obtained in a reliable way.

Preferably, the air cylinder 25 is provided with air independent from the bellows 17. For example, the air cylinder 25 or a separate reservoir thereof can be filled with air from the air system of the transport vehicle, or from an external air system and can then be decoupled from the air system. When activating the securing device 11, the air cylinder 25 can be filled with air from the reservoir at one side of the piston 26. When the securing may be released, the air cylinder 25 may be emptied, the air may flow towards the reservoir and/or towards the environment.

In this embodiment, the pivot axis 15 is provided with two abutment surfaces 28 for abutting against the stop elements 22. Between the two abutment surfaces 28, there is a height difference to accommodate different heights of the wall 13 of corner pieces of swop containers. For example, corner pieces are known to have a wall thickness of approximately 20 mm, but there are also corner pieces used with a wall thickness of approximately 28 mm. This thickness difference can be accommodated by the different abutment surfaces 28 that have a different height. Also corner pieces with other wall thicknesses are known.

A user can use for either one of the abutment surfaces 28 by turning the pivot axis with the knob 29. By turning the knob 29 of which an end 30 is coupled with a rotating element 31 that is coupled to the pivot axis 15, the pivot axis 15 can be turned such that an other abutment surface 28 is positioned towards the stop element 22. Turning the pivot axis 15 is preferably done when the locking unit 4 is in the first position. Instead of a knob 29 the pivot axis 15 and/or the abutment surfaces 28 may be arranged such that the pivot axis is rotated automatically in the correct position for the abutment surface to accommodate the wall thickness. Depending on the wall thickness of the corner piece, the abutment surfaces and/or the pivot axis are automatically turned until the corresponding abutment surface abuts to provide a correct height to accommodated the wall thickness of the corner piece.

To accommodate at least two different thicknesses of a wall 13 of corner pieces, the securing pin 27 is also provided with two cooperating surfaces 32, both having a different height. More wall thicknesses may be accommodated for example by providing more abutment surfaces with different heights.

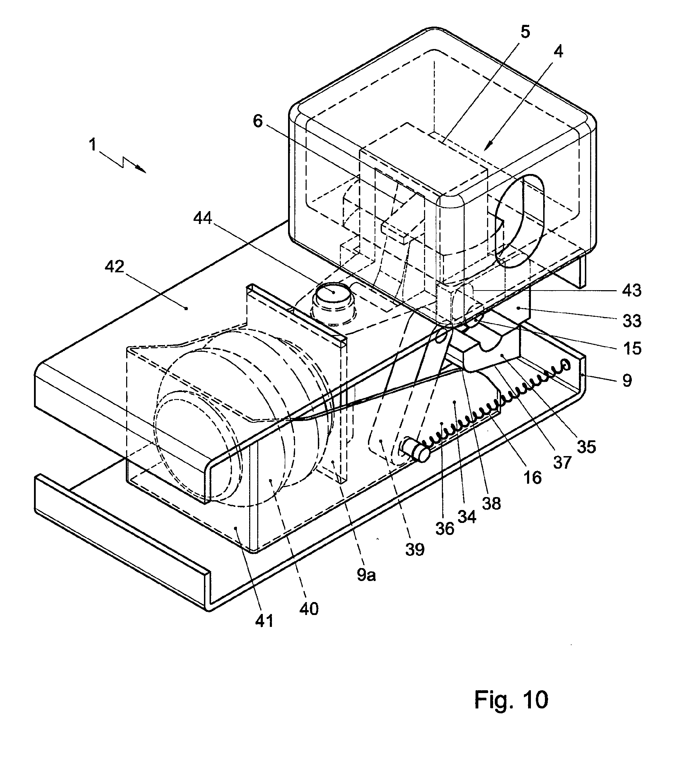

Figures 10 - 13 show another embodiment of the locking device 1 according to the invention. The locking device 1 comprises a locking unit 4 for automatically locking the corner piece of a container. The locking unit 4 comprises in this embodiment also a scissor mechanism 6 having clamping surfaces 23 for clamping behind a wall of a corner piece.

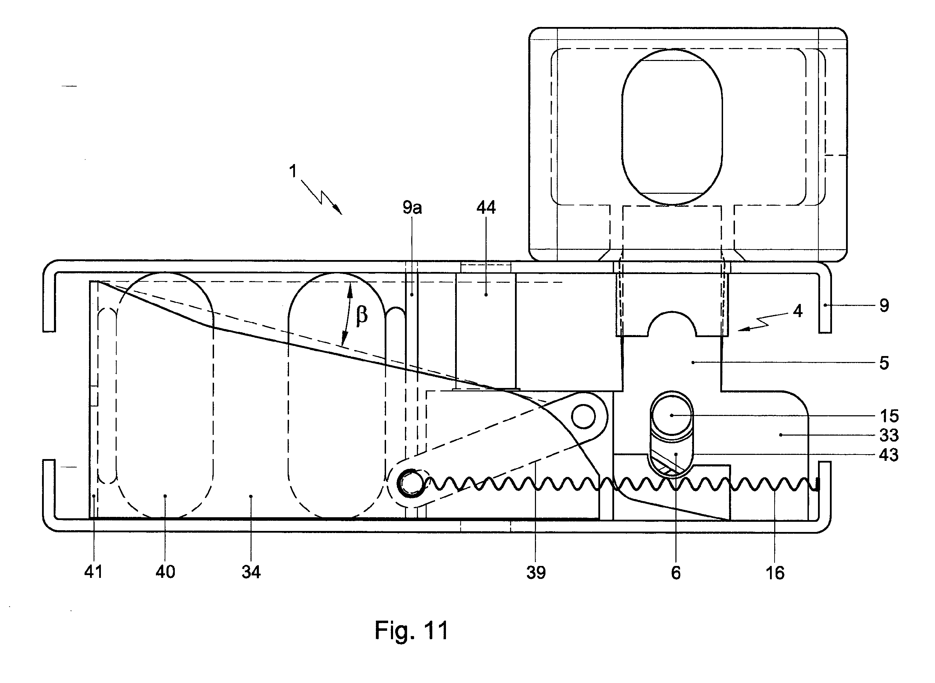

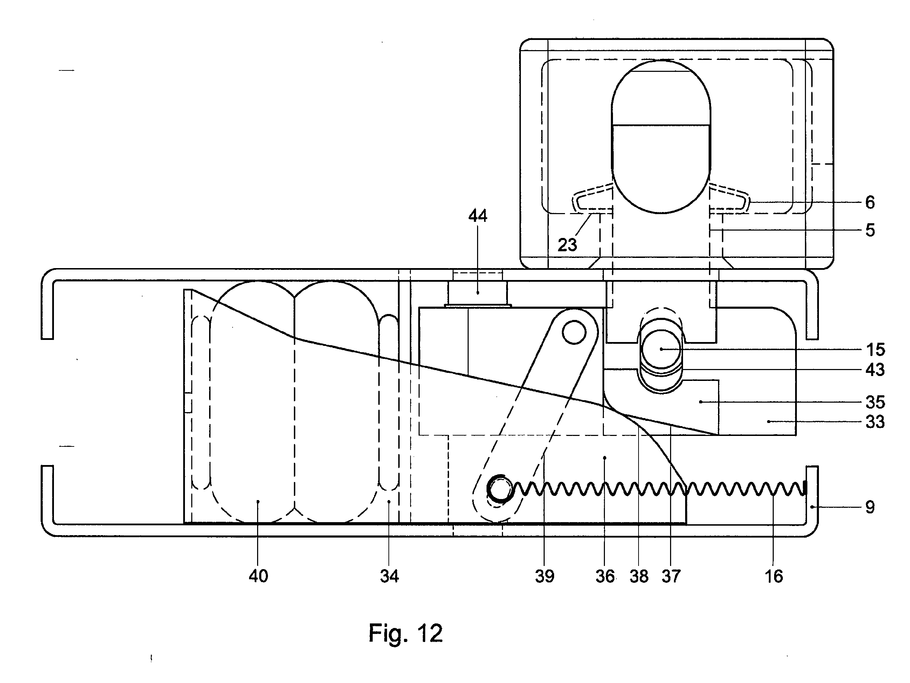

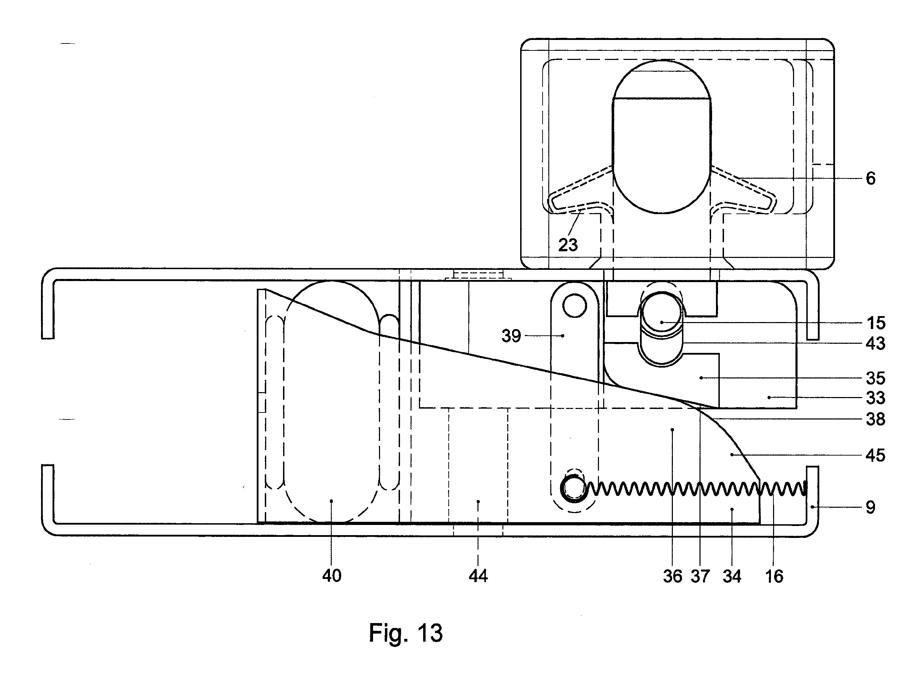

The locking unit 4 is adjustable between a first position, shown in Fig. 11, wherein the locking unit 4 is substantially inside the housing 9 and a second position, shown in Fig. 12, wherein the locking unit 4 is substantially outside the housing. The locking unit 4 is further adjustable to a third position in which the corner piece is locked, shown in Fig. 13, wherein the scissor mechanism 6 is substantially open and outside the receiving element 5.

The locking device 1 here comprises a first body part 33 and a second body part 34 that comprise first and second cooperating elements 35 and 36. The second body part 34 is substantially shoe-like with wedge-like sides in this embodiment. The first body part 33 can be understood to correspond with the holder 18 of other embodiments. The first and second cooperating elements 35, 36 comprise first and second cooperating surfaces 37. 38 for cooperation during adjustment from the first position to the second position and the third position. The surfaces 37 of the wedge-like sides of the second body part 34 cooperate with the surface 38 of the cooperating element 35. In this embodiment, there are two wedge-like sides 36 ate either side of the second body part 33. The second body part 33 comprises two cooperating elements 35.

The first body part 33 and the second body part 34 are movably connected to each other by a connecting element 39, here a connecting rod 39. Further, between the second body part 34 and the housing 9 an activating element 16, here a resilient element, more specifically a pulling spring is provided. At either side of the second body part 33, springs 16 are provided that are connected with the cooperating elements 36.

The first body part 33 comprises an elongated hole 43 in which the pivot axis 15 of the scissor mechanism 6 can move upwardly and downwardly.

Further is a bellows 40 provided in the shoe of second body part 34. The bellows 40 cooperates with one end plate 41 of the shoe 34 and with a housing plate 9a. The bellows 40 are arranged for undoing securing of the locking device 1.

The locking device 1 can be mounted to a lateral beam of a transport vehicle with an upper side 42 of the housing 9.

Fig. 11 shows the first position of the locking device 1. In the first position, the locking elements of the locking unit 4, here the scissor mechanism 6, is enclosed in the housing 9 and in the receiving element 5. In an embodiment, the receiving element 5 can be completely arranged inside the housing 9, in another embodiment, the receiving element 5 can be partially arranged inside the housing 9. The receiving element 5 can be partially arranged inside the housing and partially arranged outside the housing, but in general the largest part of the receiving element 5 is positioned inside the housing 9. One must think about approximately one to two cm that the receiving element 5 extends outside the housing 9.

By positioning the receiving element 5 partially outside the housing 9 in the first position, the receiving element 5 can act as a positioning aid for positioning the transport vehicle underneath the container. After driving the transport vehicle underneath the swop container, the transport vehicle is lifted upwards using the air system of the vehicle and/or truck. During the upward lifting of the transport vehicle, the partially extending receiving element 5 can thus help seeking the position of the opening of the corner piece when fitting itself in the corner piece during lifting.

In the first position, the first body part 33 and the shoe-like second body part 34 are positioned next to each other. The spring activating element 16 is in an extended position. The bellows 40 are inflated and press the shoe-like second body part 34 to a position in which it is next to the first body part 33. The bellows 40 are inflated using pressurized air, which can be available from the air system of the vehicle or from a separate air tank. The scissor mechanism 6 is in the closed position inside the receiving element 5. The pivot axis 15 of the scissor mechanism 6 is in an upward position in the elongated hole 43. The first body part 33 is guided in upward direction along a guiding element 44

When deflating the bellows 40, the pulling spring 16 compresses and rotates the connecting rod 39 to an upward position such that the first body part 33 is pushed relatively fast upwardly, allowing the shoe-like second body part 34 to be positioned underneath the first body part 33, as shown in Fig. 12. When pulling the shoe 34 underneath the first body part 33, the cooperating elements 35 and 36 make contact on their cooperating surfaces 37 and 38 respectively and a front part of the shoe 34 guides the shoe 34 under the first body part 33. The front part of the shoe 34 has a relatively large slope, a relatively large angle with the horizontal to allow the shoe 34 to be relatively limited in length. The cooperating surfaces 37, 38 have a corresponding slope 13 such that they can cooperate with each other by abutting against each other.

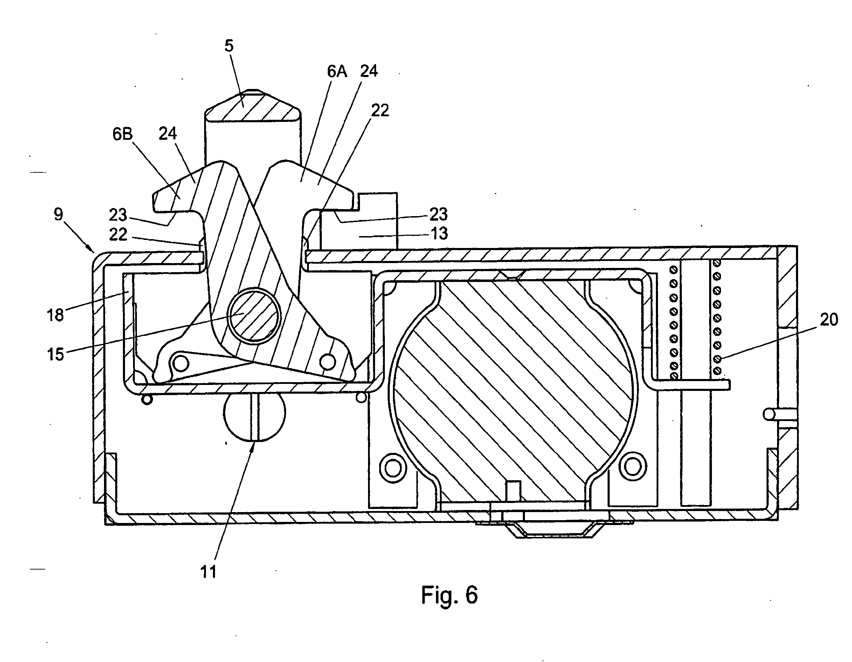

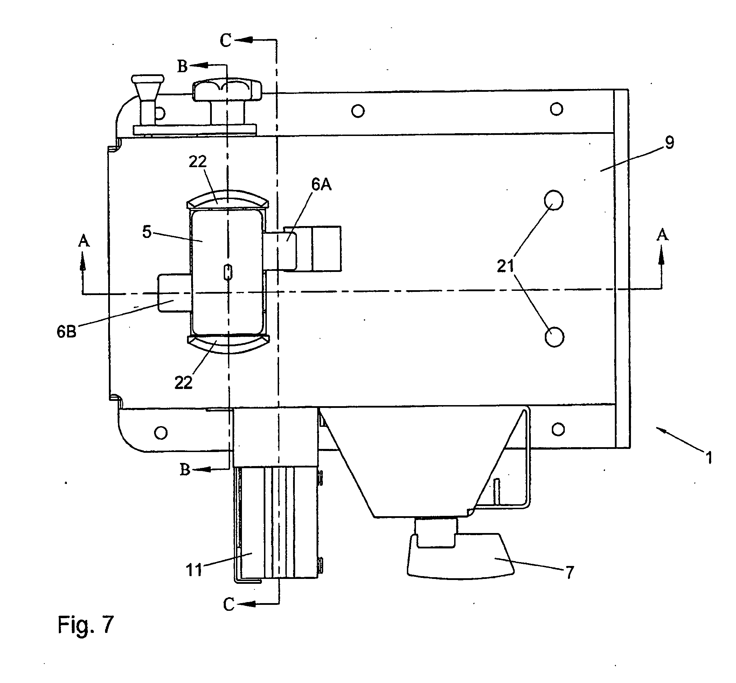

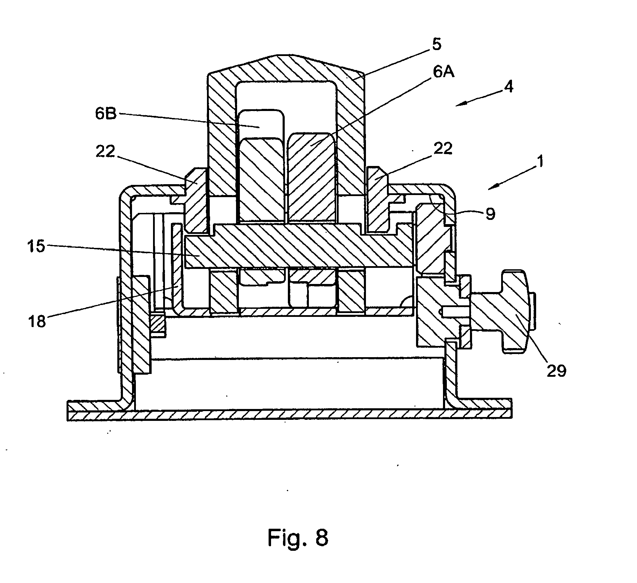

When pulling the shoe 34 further underneath the first body part 33 such that the scissor mechanism 6 goes from the second to the third position, the pivot axis 15 of the scissor mechanism is lifted upwards in the elongated hole 43 of the first body part 33. The first body part 33 comprises a bottom plate over which end parts of the locking elements 14 of the scissor mechanism 6 move, similar to the embodiment shown in Figures 3 - 9.

During pulling of the second body part 34 underneath the first body part 33 by the spring 16, the cooperating surfaces 37, 38 abut against each other and, under friction, cooperate with each other. The spring 16 further pulls the shoe-like second body part 34 underneath the first body part 33 until the cooperating surfaces 37, 38 are fixed with respect to each other under influence of the friction. The friction between the surfaces 37. 38 has then become higher than the pulling force of the spring 16, rendering the surfaces 37, 38 and the cooperating elements 35, 36 in a fixed position. The friction also causes securing of the first body part 33 and the second body part 34 with respect to each other, so a separate securing device may be omitted.

The angle 13 of the wedge-like elements 35, 36 relates to the amount of friction provided. A relatively small angle provides for significant friction and a relatively large angle provides for less friction. In the embodiment shown, the slope 13 is relatively shallow, allowing for a relatively high friction between the cooperating surfaces 37, 38 and therefore for a reliable securing of the locking device 1. The locking device 1 can thus be secured without the use of any hydraulic system or pressurized air. Of course, in an embodiment, a separate securing device may be provided as well. In addition, a pulling spring 16 is used which rest position is the compressed position in which the locking device 1 is in the third position.

The securing of the locking unit 4 and the first and second body parts 33, 34 can be undone by inflating the bellows 40. Therefore, the bellows 40 are not necessary for keeping the corner piece locked and/or secured, but are necessary for undoing the securing of the corner pieces. When inflating the bellow 40, the securing and locking of the locking unit 4 is undone by removing the cooperation between the cooperating surfaces 37, 38 against the tension of spring 16.

The spring 16 has its shortest length in rest position, as it is in this embodiment a pulling spring. The spring 16 is therefore biased towards the third position of the locking unit 4. So, when the bellows 40 are deflated, the locking unit 4 is in the third position, so the container is always locked. Also, when there is no container on the transport vehicle, the locking unit 4 is in the third position acting as an additional safety device preventing that a container is put on the locking device 1 unintentionally. Since the spring 16 is a pulling spring, the spring 16 has its shortest length in the rest position. Of course, other variants of resilient elements, such as pushing springs, torsion springs or hydraulic actuators may be used that are biased towards the third position of the locking unit 4.

Due to the cooperating surfaces 37, 38 different thicknesses of a wall of a corner piece, e.g. approximately 20 mm or approximately 28 mm, can be accommodated. When the wall of the corner piece is more thick, the locking elements 14 of the scissor mechanism 6 reach more early the wall of the corner piece 13 with the clamping surfaces 23 and the friction between the cooperating surfaces 37, 38 becomes earlier sufficiently high to lock and secure the corner piece 13.

In a rest position, the activating unit 16 is biased to the third position. When inflating the bellows 40, the locking unit 4 is brought towards the open position from the third position to the first position by pressing the second body part 34 next to the first body part 33 and elongating the spring 16. When the second body part 34 is next to the first body part 33 and the locking unit 4 is in the first position, the bellows 40 is deflated. When deflating the bellows 40, the locking unit 4 is automatically brought towards the third position by the spring action wherein the corner piece is automatically locked and secured without any manual action of the user needed on the locking unit. The bellows 40 can be operated remote, e.g. from the driver's cabin, by an operating element.

Further aspects of the invention relate to the following.

According to an aspect of the invention, a pivot pin of the scissor mechanism is movable in an elongated hole of the locking device.

According to an aspect of the invention, the activating unit is comprised in the housing.

According to an aspect of the invention, the locking device comprises a holder arranged in the housing to accommodate the locking unit and the activating unit, wherein by activating the activating unit, the holder is pushed and the locking unit is adjusted from the first position to the second position to the third position.

According to an aspect of the invention, the locking unit is biased to the third position by a resilient element.

According to a further aspect of the invention, the resilient element is a spring.

According to another aspect of the invention, the locking device further comprises an operating element for operating the locking device.

According to a further aspect of the invention, the operating element is arranged to also operate the securing device.

According to another aspect of the invention, both locking devices of the transport vehicle are operable by the same operating element.

Many variants will be apparent to the person skilled in the art. It is understood that the locking device can be used for locking corner pieces of swop containers and/or ISO containers. Those and other variants are understood to fall within the scope of the invention as defined in the following claims.

## Claims

1. A locking device (1) for a swop container, wherein the locking device (1) is arranged for cooperation with a transport vehicle, comprising a locking unit (4) for locking a corner piece of a swop container, wherein the locking unit (4) is adjustable between a first position wherein the locking unit (4) is received in a housing (9) and a second position wherein the locking unit (4) is substantially outside the housing (9), wherein the locking unit (4) is adjustable from the first position to the second position by an activating unit (16) to provide an automated locking device (1) **characterized in that**, the locking unit (4) is further adjustable from the second position into a third position in which the corner piece of the swop container is locked, wherein
the locking device (1) is adjustable from the second position to the third position by the activating unit (16).

2. The locking device (1) according to claim 1, further comprising a securing device (11) for securing the locking unit (4) in the third position.

3. The locking device (1) according to claim 2, wherein the securing device (11) is at least partially arranged in the housing (9).

4. The locking device (1) according to claim 2 or 3, wherein the securing device (11) comprises cooperating surfaces.

5. The locking device (1) according to any one of the preceding claims, wherein the locking unit (4) comprises a receiving element (5) that is receivable in a corner piece of a swop container.

6. The locking device (1) according to claim 5, wherein the locking unit (4) further comprises a locking element (14) that is receivable in the receiving element (5) in the first position and in the second position and that extends substantially outside the receiving element (5) in the third position for locking a corner piece of the swop container.

7. The locking device (1) according to claim 6 wherein the locking element (14) comprises a scissor mechanism.

8. The locking device (1) according to claim 7, wherein the scissor mechanism (6) comprises two legs (6A, 6B) with clamping surfaces (23) at an end of the legs (6A, 6B), wherein the legs (6A, 6B) are in a closed position in the first and second position of the locking unit (4) and wherein the legs (6A, 6B) are in an open position in the third position of the locking unit (4) so the clamping surfaces clamp behind a wall of the corner piece of the swop container.

9. The locking device (1) according to any one of the preceding claims, wherein the activating unit (16) is a resilient element.

10. The locking device (1) according to any one of the preceding claims, wherein the locking device (1) comprises a first body part (33) and a second body part (34) cooperating with each other during adjustment between the first position, the second position and the third position

11. The locking device (1) according to any one of the preceding claims, wherein the housing (9) is provided with at least one stop element (22) against which the locking unit (4) abuts in the second and the third position of the locking unit (4).

12. A transport vehicle for transporting a swop container, comprising at least one locking device (1) according to any one of the claims 1 - 11 for locking a corner piece of a swop container.

13. The transport vehicle according to claim 12, wherein the locking device (1) is arranged onto the lateral beam (2).

14. The transport vehicle according to claim 12 or 13, comprising two locking devices (1) on a single lateral beam of the transport vehicle, wherein the locking devices (1) are arranged each at an other end of the lateral beam.

15. A method for locking a swop container on a transport vehicle provided with at least one locking device (1) according to any one of the claims 1 - 11, comprising
- positioning the transport vehicle underneath the swop container;
- adjusting the locking unit (4) from the first position to the second position and to the third position;
- securing the locking unit (4) in the third position.

## Patentansprüche

1. Verriegelungsvorrichtung (1) für einen Wechselbehälter, wobei die Verriegelungsvorrichtung (1) für die Zusammenarbeit mit einem Transportfahrzeug geeignet ist, umfassend eine Verriegelungseinheit (4) zum Verriegeln eines Eckstücks eines Wechselbehälters, wobei die Verriegelungseinheit (4) zwischen einer ersten Position, in der die Verriegelungseinheit (4) in einem Gehäuse (9) aufgenommen ist, und einer zweiten Position, in der die Verriegelungseinheit (4) im Wesentlichen außerhalb des Gehäuses (9) ist, einstellbar ist, wobei die Verriegelungseinheit (4) von der ersten Position zur zweiten Position durch eine Aktivierungseinheit (16) einstellbar ist, um eine automatische Verriegelungsvorrichtung (1) bereitzustellen, **dadurch gekennzeichnet, dass** die Verriegelungseinheit (4) ferner von der zweiten Position in eine dritte Position, in der das Eckstück des Wechselbehälters verriegelt ist, einstellbar ist, wobei die Verriegelungsvorrichtung (1) von der zweiten Position in die dritte Position durch die Aktivierungseinheit (16) einstellbar ist.

2. Verriegelungsvorrichtung (1) nach Anspruch 1, ferner umfassend eine Sicherungsvorrichtung (11) zum Sichern der Verriegelungseinheit (4) in der dritten Position.

3. Verriegelungsvorrichtung (1) nach Anspruch 2, wobei die Sicherungsvorrichtung (11) mindestens teilweise im Gehäuse (9) angeordnet ist.

4. Verriegelungsvorrichtung (1) nach Anspruch 2 oder 3, wobei die Sicherungsvorrichtung (11) zusammenarbeitende Flächen umfasst.

5. Verriegelungsvorrichtung (1) nach einem der vorhergehenden Ansprüche, wobei die Verriegelungseinheit (4) ein Aufnahmeelement (5) umfasst, das in einem Eckstück eines Wechselbehälters aufnehmbar ist.

6. Verriegelungsvorrichtung (1) nach Anspruch 5, wobei die Verriegelungseinheit (4) ferner ein Verriegelungselement (14) umfasst, das im Aufnahmeelement (5) in der ersten Position und in der zweiten Position aufnehmbar ist und das im Wesentlichen außerhalb des Aufnahmeelements (5) in der dritten Position verläuft, um ein Eckstück des Wechselbehälters zu verriegeln.

7. Verriegelungsvorrichtung (1) nach Anspruch 6, wobei das Verriegelungselement (14) einen Scherenmechanismus umfasst.

8. Verriegelungsvorrichtung (1) nach Anspruch 7, wobei der Scherenmechanismus (6) zwei Schenkel (6A, 6B) mit Klemmflächen (23) an einem Ende der Schenkel (6A, 6B) umfasst, wobei die Schenkel (6A, 6B) in einer geschlossenen Position in der ersten und zweiten Position der Verriegelungseinheit (4) sind und wobei die Schenkel (6A, 6B) in einer geöffneten Position in der dritten Position der Verriegelungseinheit (4) sind, sodass die Klemmflächen hinter einer Wand des Eckstücks des Wechselbehälters klemmen.

9. Verriegelungsvorrichtung (1) nach einem der vorhergehenden Ansprüche, wobei die Aktivierungseinheit (16) ein federndes Element ist.

10. Verriegelungsvorrichtung (1) nach einem der vorhergehenden Ansprüche, wobei die Verriegelungsvorrichtung (1) ein erstes Körperteil (33) und ein zweites Körperteil (34) umfasst, die während der Einstellung zwischen der ersten Position, der zweiten Position und der dritten Position miteinander zusammenarbeiten.

11. Verriegelungsvorrichtung (1) nach einem der vorhergehenden Ansprüche, wobei das Gehäuse (9) mit mindestens einem Anschlagselement (22) versehen ist, gegen das die Verriegelungseinheit (4) in der zweiten und der dritten Position der Verriegelungseinheit (4) anstößt.

12. Transportfahrzeug zum Transportieren eines Wechselbehälters, umfassend mindestens eine Verriegelungsvorrichtung (1) nach einem der Ansprüche 1-11 zum Verriegeln eines Eckstücks eines Wechselbehälters.

13. Transportfahrzeug nach Anspruch 12, wobei die Verriegelungsvorrichtung (1) auf dem Seitenträger (2) angeordnet ist.

14. Transportfahrzeug nach Anspruch 12 oder 13, umfassend zwei Verriegelungsvorrichtungen (1) auf einem einzelnen Seitenträger des Transportfahrzeugs, wobei die Verriegelungsvorrichtungen (1) jeweils an einem anderen Ende des Seitenträgers angeordnet sind.

15. Verfahren zum Verriegeln eines Wechselbehälters auf einem Transportfahrzeug, versehen mit mindestens einer Verriegelungsvorrichtung (1) nach einem der Ansprüche 1-11, umfassend
- das Positionieren des Transportfahrzeugs unter dem Wechselbehälter;
- das Einstellen der Verriegelungseinheit (4) von der ersten Position in die zweite Position und in die dritte Position;
- das Sichern der Verriegelungseinheit (4) in der dritten Position.

## Revendications

1. Dispositif de verrouillage (1) pour un conteneur amovible, dans lequel le dispositif de verrouillage (1) est agencé pour coopérer avec un véhicule de transport, comprenant une unité de verrouillage (4) pour verrouiller une pièce angulaire d'un conteneur amovible, dans lequel l'unité de verrouillage (4) est réglable entre une première position dans laquelle l'unité de verrouillage (4) est reçue dans un logement (9) et une deuxième position dans laquelle l'unité de verrouillage (4) est sensiblement à l'extérieur du logement (9), dans lequel l'unité de verrouillage (4) est réglable de la première position à la deuxième position par une unité d'activation (16) pour fournir un dispositif de verrouillage automatique (1), **caractérisé en ce que** l'unité de verrouillage (4) est en outre réglable de la deuxième position à une troisième position dans laquelle la pièce angulaire du conteneur amovible est verrouillée, dans lequel :
le dispositif de verrouillage (1) est réglable de la deuxième position à la troisième position par l'unité d'activation (16).

2. Dispositif de verrouillage (1) selon la revendication 1, comprenant en outre un dispositif de fixation (11) pour fixer l'unité de verrouillage (4) dans la troisième position.

3. Dispositif de verrouillage (1) selon la revendication 2, dans lequel le dispositif de fixation (11) est au moins partiellement agencé dans le logement (9).

4. Dispositif de verrouillage (1) selon la revendication 2 ou 3, dans lequel le dispositif de fixation (11) comprend des surfaces coopérantes.

5. Dispositif de verrouillage (1) selon l'une quelconque des revendications précédentes, dans lequel l'unité de verrouillage (4) comprend un élément de réception (5) qui peut être reçu dans une pièce angulaire d'un conteneur amovible.

6. Dispositif de verrouillage (1) selon la revendication 5, dans lequel l'unité de verrouillage (4) comprend en outre un élément de verrouillage (14) qui peut être reçu dans l'élément de réception (5) dans la première position et dans la deuxième position et qui s'étend sensiblement à l'extérieur de l'élément de réception (5) dans la troisième position pour verrouiller une pièce angulaire du conteneur amovible.

7. Dispositif de verrouillage (1) selon la revendication 6, dans lequel l'élément de verrouillage (14) comprend un mécanisme de ciseau.

8. Dispositif de verrouillage (1) selon la revendication 7, dans lequel le mécanisme de ciseau (6) comprend deux pattes (6A, 6B) avec des surfaces de serrage (23) au niveau d'une extrémité des pattes (6A, 6B), dans lequel les pattes (6A, 6B) sont dans une position fermée dans la première et la deuxième position de l'unité de verrouillage (4) et les pattes (6A, 6B) sont dans une position ouverte dans la troisième position de l'unité de verrouillage (4) de sorte que les surfaces de serrage serrent derrière une paroi de la pièce angulaire du conteneur amovible.

9. Dispositif de verrouillage (1) selon l'une quelconque des revendications précédentes, dans lequel l'unité d'activation (16) est un élément élastique.

10. Dispositif de verrouillage (1) selon l'une quelconque des revendications précédentes, dans lequel le dispositif de verrouillage (1) comprend une première partie de corps (33) et une seconde partie de corps (34) coopérant entre elles pendant le réglage entre la première position, la deuxième position et la troisième position.

11. Dispositif de verrouillage (1) selon l'une quelconque des revendications précédentes, dans lequel le logement (9) est prévu avec au moins un élément de butée (22) contre lequel l'unité de verrouillage (4) vient en butée dans la deuxième et la troisième position de l'unité de verrouillage (4).

12. Véhicule de transport pour transporter un conteneur amovible, comprenant au moins un dispositif de verrouillage (1) selon l'une quelconque des revendications 1 à 11 pour verrouiller une pièce angulaire d'un conteneur amovible.

13. Véhicule de transport selon la revendication 12, dans lequel le dispositif de verrouillage (1) est agencé sur la poutre latérale (2).

14. Véhicule de transport selon la revendication 12 ou 13, comprenant deux dispositifs de verrouillage (1) sur une seule poutre latérale du véhicule de transport, dans lequel les dispositifs de verrouillage (1) sont chacun agencés au niveau d'une autre extrémité de la poutre latérale.

15. Procédé pour verrouiller un conteneur amovible sur un véhicule de transport doté d'au moins un dispositif de verrouillage (1) selon l'une quelconque des revendications 1 à 11, comprenant les étapes consistant à :
positionner le véhicule de transport sous le conteneur amovible ;
régler l'unité de verrouillage (4) de la première position à la deuxième position et à la troisième position ;
fixer l'unité de verrouillage (4) dans la troisième position.
